# EUROPEAN PATENT SPECIFICATION

(11) **EP 3 909 725 B1**
(45) Date of publication and mention of the grant of the patent: **29.03.2023**
(21) Application number: 21171352.4
(22) Date of filing: 29.04.2021
(51) Int. Cl.: B25J 15/06, B65G 47/91, B66C 1/02, B25J 15/00, B25J 19/02, B66C 13/46

(54) **SUCTION-CUP PICK-UP ASSEMBLY**
SAUGNAPFAUFNAHMEANORDNUNG
ENSEMBLE DE RAMASSAGE À VENTOUSE

(30) Priority: 29.04.2020 IT 202000009367
(43) Date of publication of application: 17.11.2021
(73) Proprietor: BIESSE S.p.A., 61122 Pesaro (IT)
(72) Inventor: MATURO, Roccomatteo, 61036 Colli al Metauro (PU) (IT)
(74) Representative: Manconi, Stefano

(56) References cited:
- DE-A1- 3 120 823
- DE-A1- 3 810 989
- JP-A- H11 123 685
- JP-U- S61 145 773

## Description

### TECHNICAL FIELD

The invention relates to a suction-cup pick-up assembly.

### BACKGROUND ART

The invention especially finds advantageous application in the handling of panels made of wood, plastic or the like, to which explicit reference will be made in the description below without because of this loosing in generality.

In the industry dealing with the handling of panels made of wood, plastic or the like, suction-cup pick-up assemblies are known, which comprise a support bar with an elongated shape and a plurality of suction-cup pick-up devices distributed along the support bar.

Each suction-cup pick-up device comprises a tubular support body, which is coupled to the support bar in a sliding manner, and a tubular stem, which extends through the support bar, has a longitudinal axis transverse to a sliding direction of the tubular support body along the support bar and is coupled to the tubular support body in a sliding manner in order to move parallel to the longitudinal axis.

The tubular stem has two opposite free ends, one of them being connected to a pneumatic suction device and the other one axially projecting from the tubular support body and having a suction cup connected to it.

The suction-cup pick-up device further comprises a shutter, which is engaged in the tubular stem in a sliding manner in order to connect the suction cup to the pneumatic suction device and is coupled to the tubular stem in a fluid-tight manner through the interposition of an annular gasket mounted on the shutter.

The assembly defined by the tubular stem and by the suction cup is moved to - and normally held in - a lowered position by a spring interposed between the tubular support body and the tubular stem and is lifted when it is pushed by the support bar against the panel held each time by the suction-cup pick-up assembly.

The shutter is moved to - and normally held in - a lowered position closing the tubular stem by a spring interposed between the tubular stem and the shutter and is moved to a lifted position opening the tubular stem when it is pushed by the support bar against the panel held each time by the suction-cup pick-up assembly.

The suction-cup pick-up assembly further comprises a detection device to detect the axial position of the shutters of at least some suction-cup pick-up devices along the relative tubular support bodies.

The detection device comprises at least one feeler, which projects downwards from the support bar, extends between the suction-cup pick-up devices and is coupled to the support bar in a sliding manner so as to move parallel to the longitudinal axes of the suction-cup pick-up devices.

The feeler is moved to - and normally held in - a lowered position by a spring interposed between the feeler and the support bar and is lifted when it is pushed by the support bar against the panel held each time by the suction-cup pick-up assembly.

Suction-cup pick-up assemblies of the type described above are relatively complex and expensive due to the presence of the feelers.

A known suction-cup pick-up assembly, similar to the one in claim 1, is disclosed in JP H11 123685 A. In order to detect the relative elements positions, the arrangement comprises a first and a second independent detection devices. Each detection device comprises a detector and a reference element, the first detection device has the reference element mounted on the shutter and the detector element arranged on a valve body movable relative to a support body. The second device has the reference element mounted on the valve body and the detector element fixed on the support body. The detector element on the support body does interact with reference element on the shutter.

Furthermore, the installation of said feelers between the suction-cup pick-up devices is relatively complicated due to the relatively small spaces available on the support bar and the reliability of the feelers is relatively small in case relatively small-sized panels have to be picked up, for they prevent the feeler from coming into contact with the panels themselves.

### DISCLOSURE OF INVENTION

The object of the invention is to provide a suction-cup pick-up assembly, which is not affected by the aforementioned drawbacks and can be manufactured in a straightforward and low-cost manner.

According to the invention, there is provided a suction-cup pick-up assembly as claimed in the appended claims.

### BRIEF DESCRIPTION OF THE DRAWINGS

The invention will now be described with reference to the accompanying drawings showing a non-limiting embodiment thereof, wherein:
figure 1 is a schematic perspective view, with parts removed for greater clarity, of a preferred embodiment of the suction-cup pick-up assembly according to the invention;
figure 2 is a schematic perspective view, with parts removed for greater clarity, of a detail of the suction-cup pick-up assembly of figure 1; and
figure 3 is a schematic longitudinal section, with parts removed for greater clarity, of the detail of figure 2.

### BEST MODE FOR CARRYING OUT THE INVENTION

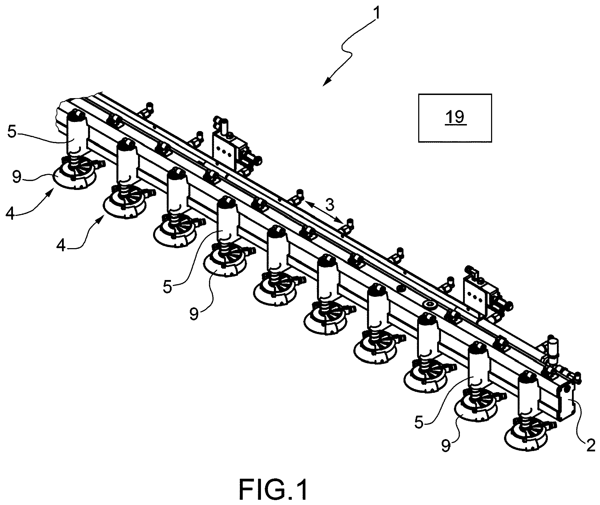

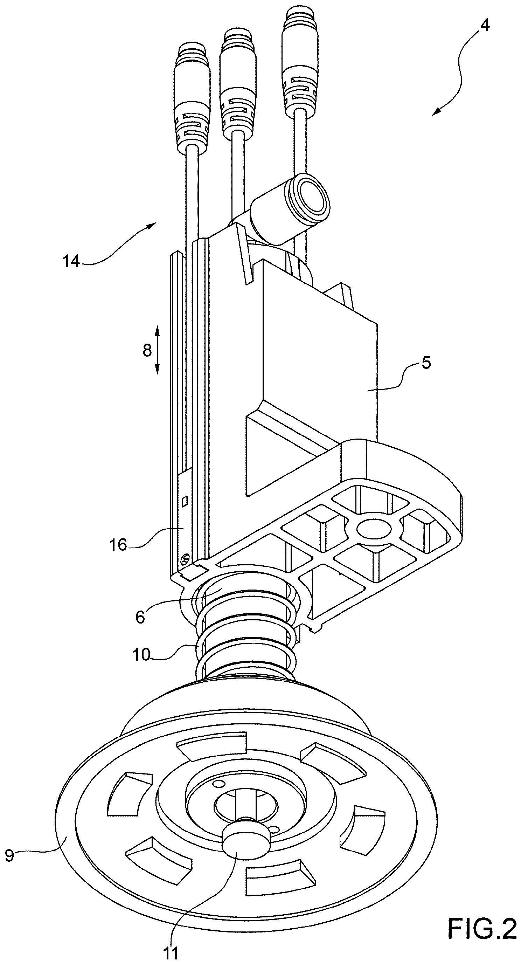

With reference to figures 1, 2 and 3, number 1 indicates, as a whole, a suction-cup pick-up assembly, in particular for handling panels (not shown) made of wood, plastic or the like, comprising a support bar 2 with an elongated shape, which extends in a direction 3 and supports a plurality of suction-cup pick-up devices 4 distributed along the bar 2.

Each device 4 comprises a tubular support body 5, which is coupled to the bar 2 in a sliding manner, and a tubular stem 6, which has a longitudinal axis 7 parallel to a direction 8 substantially transverse to the direction 3, extends through the body 5 and is coupled to the body 5 in a sliding manner in order to move in the direction 8.

The stem 6 has two opposite free ends, one of them being connected to a known pneumatic suction device, which is not shown, and the other one axially projecting from the body 5 and having a suction cup 9 connected to it.

The assembly defined by the stem 6 and by the suction cup 9 is moved to - and normally held in - a lowered position by a spring 10 interposed between the body 5 and the stem 6.

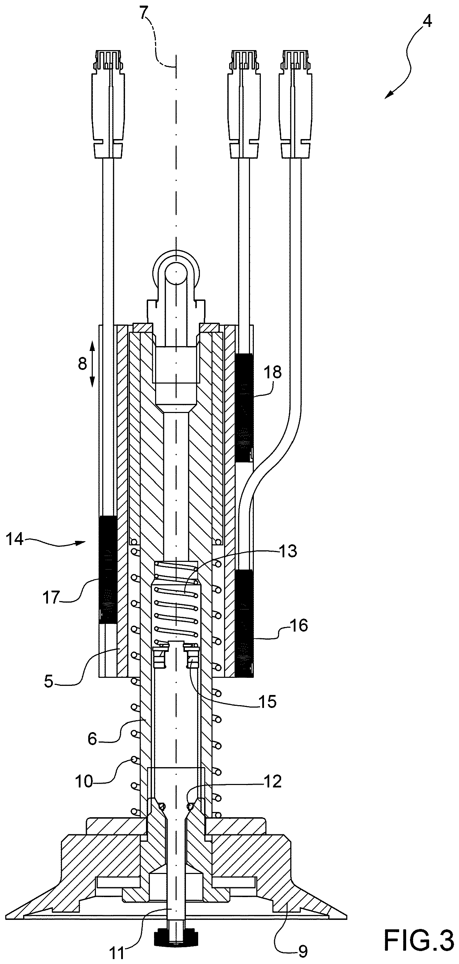

The device 4 further comprises a shutter 11, which is engaged through the stem 6 in a sliding manner and is movable in the direction 8 between a closing position (figure 3), in which the stem 6 and the shutter 11 are coupled to one another in a fluid-tight manner through the interposition of an annular gasket 12 mounted on the shutter 11 and the shutter 11 projects at the bottom of the suction sup 9, and an opening position (not shown), in which the shutter 11 and, hence, the annular gasket 12 disengage the stem 6 in order to connect the suction cup 9 to the aforesaid pneumatic suction device (not shown).

The shutter 11 is moved to - and normally held in - its closing position by a spring 13, which is interposed between the stem 6 and the shutter 11.

Each device 4 of at least part of the devices 4 is provided with a detection device 14 to detect the axial position of the shutter 11 along the body 5 in the direction 8.

The device 14 comprises a reference element 15, which is mounted on the shutter 11, and a plurality of detector elements, in this case three detector elements 16, 17, 18, which are mounted on the body 5, are distributed along the axis 7 in the direction 8, are axially staggered relative to one another along the body 5 and interact with the element 15 in order to detect the axial position of the shutter 11.

In this case, the element 15 comprises an annular magnet, which is mounted on the shutter 11 coaxially to the axis 7 and each element 16, 17, 18 comprises a magnetic sensor mounted on the body 5.

According to some variants which are not shown herein, each element 16, 17, 18 comprises, for example, an ultrasound sensor or an optical radiation sensor, in particular a photodetector, or an inductive or capacitive sensor associated with an element 15 compatible with them.

The operation of the assembly 1 will be described assuming that one single panel (not shown) is picked up by means of one single device 4 and starting from an instant in which the assembly defined by the stem 6 and by the suction cup 9 is arranged in its lowered position and the shutter 11 is arranged in its closing position and in contact with the panel (not shown).

Following a first step, during which the bar 2 is lowered against the panel (not shown):
the shutter 11 is moved, relative to the body 5 and to the assembly defined by the stem 6 and by the suction cup 9, against the action of the spring 13, to a first lifted position, in which the element 15 radially faces the element 16, interacts with the element 16 in order to warn an electronic control unit 19 of the presence of the panel (not shown) and disengages the stem 6 in order to connect the suction cup 9 to the aforesaid pneumatic suction device (not shown); and
the suction cup 9 comes into contact with the panel (not shown).

Following a subsequent second step, during which the bar 2 is lowered against the panel (not shown), the assembly defined by the stem 6, by the suction cup 9 and by the shutter 11 is moved, relative to the body 5 and against the thrust of the spring 10, to a second lifted position, in which:
the suction cup 9 is deformed by the panel (not shown) and gets hold of the panel (not shown); and
the element 15 radially faces the element 17 and interacts with the element 17 in order to warn the unit 19 that the panel (not shown) was picked up.

In case of fault of the assembly 1 and of a third lowering step, during which the bar 2 is lowered against the panel (not shown), the assembly defined by the stem 6, by the suction cup 9 and by the shutter 11 is moved, relative to the body 5 and against the thrust of the spring 10, to a third lifted position, in which the element 15 radially faces the element 18 and interacts with the element 18 in order to warn the unit 19 of an emergency condition and allow the unit 19 to stop the movement of the bar 2.

Once the panel (not shown) has been picked up, the bar 2 is lifted in order to disengage the panel (not shown) from a stack of panels or from a support surface and the assembly defined by the stem 6, by the suction cup 9 and by the shutter 11 is moved again by the spring 10 to the first lifted position, in which the element 15 radially faces the element 16 and interacts with the element 16 in order to warn the unit 19 of the presence of the panel (not shown).

In case of fault of the assembly 1 and loss of the panel (not shown) during the transport, the shutter 11 is moved again by the spring 13 to its closing position and the element 15 disengages the element 16 in order to warn the unit 19 of the loss of the panel (not shown).

According to some variants which are not shown herein, the detection device 14 comprises at least one of the elements 16, 17, 18 or a combination of two of the three elements 16, 17, 18.

The integration of the detection device 14 in the suction-cup pick-up device 4 allows manufacturers to obtain a suction-cup pick-up assembly 1 that is relatively simple, economic and small-sized and to ensure the correct operation of the detection device 14 in case relatively small-sized panels (not shown) have to be picked up.

## Claims

1. A suction-cup pick-up assembly comprising at least one suction-cup pick-up device (4) comprising, in turn, a tubular support body (5); an elongated tubular stem (6), which has a longitudinal axis (7), is engaged in the tubular support body (5) in a sliding manner and is connected to a pneumatic suction device; a suction cup (9), which is fixed to a free end of the tubular stem (6); and a shutter (11), which is engaged in the tubular stem (6) in a sliding manner and is movable parallel to the longitudinal axis (7) due to the thrust of a panel to be picked up in order to connect the suction cup (9) to the pneumatic suction device; and the suction-cup pick-up device (4) further comprises a detection device (14) to detect the axial position of the shutter (11) along the tubular support body (5); the detection device (14) comprising a reference element (15) mounted on the shutter (11) and at least one detector element (16, 17, 18) mounted on the tubular support body (5) in order to interact with the reference element (15) and detect the axial position of the shutter (11).

2. A suction-cup pick-up assembly according to claim 1, wherein the detection device (14) comprises at least two detector elements (16, 17, 18) distributed along the longitudinal axis (7) of the tubular stem (6) in order to detect a least two axial positions of the shutter (11).

3. A suction-cup pick-up assembly according to claim 1 or 2, wherein the suction-cup pick-up device (4) further comprises a first elastic pushing device (10), which is interposed between the tubular support body (5) and the tubular stem (6).

4. A suction-cup pick-up assembly according to any one of the preceding claims, wherein the suction-cup pick-up device (4) further comprises a second elastic pushing device (13), which is interposed between the tubular stem (6) and the shutter (11).

5. A suction-cup pick-up assembly according to any one of the preceding claims, wherein the suction-cup pick-up device (4) further comprises an annular gasket (12) to couple the tubular stem (6) and the shutter (11) in a fluid-tight manner.

6. A suction-cup pick-up assembly according to any one of preceding claims and further comprising a support bar (2), which extends crosswise to said longitudinal axis (7) and is engaged by the tubular support body (5) of the suction-cup pick-up device (4) in a sliding manner.

7. A suction-cup pick-up assembly according to claim 6 and comprising a plurality of suction-cup pick-up devices (4) coupled to the support bar (2) in a sliding manner.

8. A suction-cup pick-up assembly according to any one of preceding claims, wherein each detector element (16, 17, 18) comprises a magnetic detector element.

9. A suction-cup pick-up assembly according to any one of the claims from 1 to 7, wherein each detector element (16, 17, 18) comprises an ultrasound detector element or an optical detector element.

## Patentansprüche

1. Saugnapfhochhebebaugruppe, umfassend
zumindest eine Saugnapfhochhebevorrichtung (4), wiederum aufweisend einen rohrförmigen Stützkörper (5); einen langgestreckten rohrförmigen Stiel (6), welcher eine Längsachse (7) aufweist, mit dem rohrförmigen Stützkörper (5) auf gleitende Art und Weise in Eingriff steht und an eine pneumatische Saugeinrichtung angeschlossen ist;
einen Saugnapf (9), welcher an einem freien Ende des rohrförmigen Stiels (6) befestigt ist; und
einen Verschluss (11), welcher mit dem rohrförmigen Stiel (6) auf gleitende Art und Weise in Eingriff steht und parallel zur Längsachse (7) aufgrund der Schubkraft einer hochzuhebenden Tafel beweglich ist, um den Saugnapf (9) mit der pneumatischen Saugeinrichtung zu verbinden; und
die Saugnapfhochhebevorrichtung (4) ferner umfassend eine Detektionseinrichtung (14), um die die Axialposition des Verschlusses (11) entlang des rohrförmigen Stützkörpers (5) zu erfassen; die Detektionseinrichtung (14) umfassend ein auf dem Verschluss (11) befestigtes Referenzelement (15) und zumindest ein Detektionselement (16, 17, 18), angebracht auf dem rohrförmigen Stützkörper (5), um mit dem Referenzelement (15) zusammenzuwirken und die Axialposition des Verschlusses (11) zu erfassen.

2. Saugnapfhochhebebaugruppe nach Anspruch 1, wobei die Detektionseinrichtung (14) zumindest zwei entlang der Längsachse (7) des rohrförmigen Stiels (6) verteilte Detektionselemente (16, 17, 18) umfasst, um wenigstens zwei Axialpositionen des Verschlusses (11) zu erfassen.

3. Saugnapfhochhebebaugruppe nach Anspruch 1 oder 2, wobei die Saugnapfhochhebevorrichtung (4) ferner eine erste elastische Drückeinrichtung (10) umfasst, welche zwischengelagert ist zwischen dem rohrförmigen Stützkörper (5) und dem rohrförmigen Stiel (6).

4. Saugnapfhochhebebaugruppe nach einem der vorhergehenden Ansprüche, wobei die Saugnapfhochhebevorrichtung (4) ferner eine zweite elastische Drückeinrichtung (13) umfasst, welche zwischengelagert ist zwischen dem rohrförmigen Stiel (6) und dem Verschluss (11).

5. Saugnapfhochhebebaugruppe nach einem der vorhergehenden Ansprüche, wobei die Saugnapfhochhebevorrichtung (4) ferner eine ringförmige Dichtung (12) umfasst, um den rohrförmigen Stiel (6) und den Verschluss (11) auf fluiddichte Art und Weise zu koppeln.

6. Saugnapfhochhebebaugruppe nach einem der vorhergehenden Ansprüche und ferner aufweisend eine Stützstange (2), welche sich quer zur Längsachse (7) erstreckt und durch den rohrförmigen Stützkörper (5) der Saugnapfhochhebevorrichtung (4) auf gleitende Art und Weise in Eingriff genommen wird.

7. Saugnapfhochhebebaugruppe nach Anspruch 6, und umfassend eine Vielzahl an Saugnapfhochhebevorrichtungen (4), gekoppelt mit der Stützstange (2) auf gleitende Art und Weise.

8. Saugnapfhochhebebaugruppe nach einem der vorhergehenden Ansprüche, wobei jedes Detektionselement (16, 17, 18) ein magnetisches Detektionselement umfasst.

9. Saugnapfhochhebebaugruppe nach einem der Ansprüche 1 bis 7, wobei jedes Detektionselement (16, 17, 18) ein Ultraschalldetektionselement oder ein optisches Detektionselement umfasst.

## Revendications

1. Ensemble de ramassage à ventouse comprenant au moins un dispositif de ramassage à ventouse (4) comprenant, à son tour, un corps de support tubulaire (5) ; une tige tubulaire allongée (6) qui a un axe longitudinal (7), est mise en prise dans le corps de support tubulaire (5) d'une manière coulissante et est raccordée à un dispositif d'aspiration pneumatique ; une ventouse (9) qui est fixée à une extrémité libre de la tige tubulaire (6) ; et un volet d'obturation (11) qui est mis en prise dans la tige tubulaire (6) d'une manière coulissante et est mobile parallèlement à l'axe longitudinal (7) en raison de la poussée d'un panneau à ramasser afin de raccorder la ventouse (9) au dispositif d'aspiration pneumatique ; et le dispositif de ramassage à ventouse (4) comprend en outre un dispositif de détection (14) pour détecter la position axiale du volet d'obturation (11) le long du corps de support tubulaire (5) ; le dispositif de détection (14) comprenant un élément de référence (15) monté sur le volet d'obturation (11) et au moins un élément de détecteur (16, 17, 18) monté sur le corps de support tubulaire (5) afin d'interagir avec l'élément de référence (15) et détecter la position axiale du volet d'obturation (11).

2. Ensemble de ramassage à ventouse selon la revendication 1, dans lequel le dispositif de détection (14) comprend au moins deux éléments de détecteur (16, 17, 18) répartis le long de l'axe longitudinal (7) de la tige tubulaire (6) afin de détecter au moins deux positions axiales du volet d'obturation (11).

3. Ensemble de ramassage à ventouse selon la revendication 1 ou 2, dans lequel le dispositif de ramassage à ventouse (4) comprend en outre un premier dispositif de poussée élastique (10) qui est intercalé entre le corps de support tubulaire (5) et la tige tubulaire (6).

4. Ensemble de ramassage à ventouse selon l'une quelconque des revendications précédentes, dans lequel le dispositif de ramassage à ventouse (4) comprend en outre un second dispositif de poussée élastique (13) qui est intercalé ente la tige tubulaire (6) et le volet d'obturation (11).

5. Ensemble de ramassage à ventouse selon l'une quelconque des revendications précédentes, dans lequel le dispositif de ramassage à ventouse (4) comprend en outre un joint annulaire (12) pour coupler la tige tubulaire (6) et le volet d'obturation (11) d'une manière étanche au fluide.

6. Ensemble de ramassage à ventouse selon l'une quelconque des revendications précédentes et comprenant en outre une barre de support (2) qui s'étend transversalement par rapport audit axe longitudinal (7) et est mise en prise par le corps de support tubulaire (5) du dispositif de ramassage à ventouse (4) d'une manière coulissante.

7. Ensemble de ramassage à ventouse selon la revendication 6 et comprenant une pluralité de dispositifs de ramassage à ventouse (4) couplés à la barre de support (2) d'une manière coulissante.

8. Ensemble de ramassage à ventouse selon l'une quelconque des revendications précédentes, dans lequel chaque élément de détecteur (16, 17, 18) comprend un élément de détecteur magnétique.

9. Ensemble de ramassage à ventouse selon l'une quelconque des revendications 1 à 7, dans lequel chaque élément de détecteur (16, 17, 18) comprend un élément de détecteur à ultrasons ou un élément de détecteur optique.
